# EUROPEAN PATENT SPECIFICATION

(11) **EP 3 325 405 B1**
(45) Date of publication and mention of the grant of the patent: **30.10.2019**
(21) Application number: 16739188.7
(22) Date of filing: 18.07.2016
(51) Int. Cl.: C01B 32/192, B01J 19/12, B05D 3/06, B05D 3/10, B05D 5/08, B05D 7/14, B05D 3/02, C09B 23/16, C09D 1/00, C09D 5/32, C01B 32/184, B82Y 40/00, B82Y 30/00

(54) **A COMPOSITION COMPRISING GRAPHITE OXIDE AND AN INFRARED ABSORBING COMPOUND AND A METHOD OF MAKING GRAPHENE THEREOF**
ZUSAMMENSETZUNG MIT GRAPHITOXID UND INFRAROTABSORBIERENDE VERBINDUNG UND EIN VERFAHREN ZUR HERSTELLUNG VON GRAPHEN DARAUS
COMPOSITION COMPRENANT DE L'OXYDE DE GRAPHITE ET COMPOSÉ ABSORBANT LE RAYONNEMENT INFRAROUGE ET UN PROCÉDÉ DE FABRICATION DE GRAPHÈNE

(30) Priority: 23.07.2015 EP 15178095
(43) Date of publication of application: 30.05.2018
(73) Proprietor: AGFA NV, 2640 Mortsel (BE); Agfa-Gevaert, 2640 Mortsel (BE)
(72) Inventor: DESMET, Tim, 2640 Mortsel (BE)
(74) Representative: Vanderstede, Els
(86) International application number: PCT/EP2016/067047
(87) International publication number: WO 2017/013058

(56) References cited:
- WO-A1-2013/160736
- WO-A2-2011/072213
- US-A1- 2013 056 346
- US-A1- 2015 175 426

## Description

### FIELD OF THE INVENTION

The present invention relates to a composition comprising graphite oxide capable of switching form a hydrophilic state into a hydrophobic state upon exposure to heat and/or light.

### BACKGROUND OF THE INVENTION

Graphite is a crystalline carbon-allotrope consisting of stacked layers of sp²-hybridised carbon aromatic rings. Graphene corresponds to one or some of these pure monolayers. Graphene is chemically inert, strong, electrical conductive and hydrophobic and has been the subject of many research projects over the past years.

A preferred method in the art for preparing graphene involves oxidation of graphite to graphite oxide followed by a reduction reaction of the graphite oxide to graphene. During the oxidation of graphite to graphite oxide, the interaction between the different layers in the graphite is disturbed and the introduction of oxygen-containing polar groups renders the obtained graphite oxide hydrophilic and dispersible in water in the form of macroscopic flakes. Chemical reduction of these graphite oxide flakes yields a suspension of graphene flakes. For example, the reduction can be achieved by treating suspended graphite oxide with hydrazine hydrate at 100 °C for 24 hours, by exposing graphite oxide to hydrogen plasma for a few seconds, or by exposure to a strong pulse of light, for example a Xenon flash. However, manifold defects already present in graphite oxide may hamper the effectiveness of this reduction. Thus, the graphene quality obtained after reduction is limited by both the precursor quality (graphite oxide) and the efficiency of the reducing reaction. Alternatively, graphene may also be produced through thermal methods. For example, by rapid heating (>2000 °C/min) to 1050 °C carbon dioxide releases and the oxygen functionalities are removed. Exposing a film of graphite oxide to a laser emitting at 355 nm or 532 nm has also revealed to produce quality graphene at a low cost.

US2015/0175426 discloses a low-temperature preparation method of graphene including a heat treatment of graphite oxide and sulfuric acid.

WO2013/160736 discloses a method of preparing graphene comprising contacting a graphite oxide composition including an organic solvent with a photocatalytic-coated metal substrate to yield graphene.

WO2013/065346 discloses a method of preparing graphene comprising exposing graphite oxide to electromagnetic radiation.

WO 2011/072213 discloses a method for producing graphene by exposing graphite oxide with ultraviolet, visible or infrared radiant energy. The method is used for locally generating heat for example in phototherapy, domestic purposes and/or desalination of water. It is shown that, for aqueous graphite oxide solutions, the strong absorption of the IR radiation by water and the very weak absorption of the IR photons by graphite oxide prevents the conversion of graphite oxide to graphene. With laser radiation of 532 nm (7 W, 30 Hz), graphite oxide is converted to graphene, while upon laser irradiation at a wavelength of 1064 nm no reduction of graphite oxide is observed. Also the publications of Zhang et al. in Adv. Optical Mater. 2014,2, 10-28 and Feng et al. in Appl. Phys. Lettt.,2010,96 report that no reduction of graphite oxide to graphene is observed under infrared irradiation of graphite oxide solutions.

### SUMMARY OF THE INVENTION

It is an object of the present invention to provide a graphite oxide composition that can efficiently be reduced to graphene or graphene-like structures upon absorption of heat and/or light produced by low-cost lasers; more specifically upon infrared irradiation. Also a method of making graphene or graphene-like structures by exposing a graphite oxide composition with heat and/or light is an aspect of the present invention.

It was found that a composition including graphite oxide and an infrared absorbing compound results in an efficient formation of chemically inert, strong, electrical conductive and hydrophobic graphene or graphene-like structures upon exposure to heat and/or light.

According to the present invention there is further provided a method of producing graphene or graphene-like structures comprising the step of exposing a composition including graphite oxide and an infrared absorbing compound to heat and/or infrared light. In contrast to prior art methods, the method of the present invention does not require the use of reducing agents to convert graphite oxide to graphene or graphene-like structures and contamination of the graphene or graphene-like structures by such agents and/or the generation of noxious by-products is eliminated. Moreover, the technology provided herein is convenient, cost-efficient and is favorable from an environmental point of view.

Preferred embodiments of the present invention are described in the dependent claims.

### DETAILED DESCRIPTION OF THE INVENTION

According to the present invention, it was found that a composition including both graphite oxide and an infrared absorbing compound can be reduced to graphene or graphene-like structures by means of irradiation with visible and/or infrared light. Graphene-like structures means graphene which may include some defects. The reduction reaction of hydrophilic graphite oxide causes the formation of hydrophobic graphene or graphene-like structures. It was found that by including an infrared absorbing compound to graphite oxide, an efficient reduction of the graphite oxide can be achieved which is characterized by a low power consumption. Visible light refers to electromagnetic radiation from about 390 nm to about 750 nm and infrared light refers to electromagnetic radiation from about 750 nm to about 1400 nm.

By including an infrared absorbing compound which converts the absorbed light into heat in the composition of the current invention, it was surprisingly found that an efficient reduction of graphite oxide into high quality graphene or graphene-like structures is obtained. The composition is mainly sensitized for infrared lasers such as lasers emitting at 830 nm or 1064 nm and/or for visible light, for example for exposure by an Ar laser (488 nm) or a FD-YAG laser (532 nm).

Graphite oxide is preferably in the form of flakes. The flakes preferably have a diameter of 200 to 2000 nanometer; more preferably a diameter of 400 to 1500 nanometer; and most prerferably a diameter of 600 to 800 nanometer. The average thickness of the flakes may be between 1 and 50 nm. The amount of graphite oxide in the composition of the current invention is preferably from 0.05 mg/m² to 10 mg/m²; more preferably from 0.1 mg/m² to 5 mg/m²; most preferably from 50 mg/m² to 2 g/m².

The graphite oxide may be dispersed in a liquid medium such as for example an aqueous solution or a solution including one or more organic solvents. Liquid media suitably used to disperse graphite oxide include but are not limited to aqueous-based media such as water; aqueous solutions including water and alcohols such as ethanol (e.g. the ethanol may be present in an amount from 10 to 90%, preferably from 20 to 80%, more preferably from 30 to 70% or from 40 to 60%, and most preferably in an amount of about 50% ethanol); solutions of polyethylene glycol (PEG) in water (e.g. from about 1% to about 10%, e.g. about 1, 2, 3, 4, 5, 6, 7, 8, 9 or 10% PEG in water); other alcohols such as methanol, isopropanol, etc., or other polar liquids such as acetonitrile, dimethylsulfoxide etc.. The concentration of graphite oxide in the solution is preferably in the range from about 0.1 mg/ml (or even less) to about 10 mg/ml (or greater), more preferably in the range from about 1 mg/ml to about 8 mg/ml, and most preferably in the range between 2 and 6 mg/ml.

The composition of the current invention includes one or more infrared absorbing compound(s) which absorb visible and/or infrared (IR) radiation light and converts the absorbed energy into heat. The infrared absorbing compound, also referred to herein as IR-absorbing compound, is an infrared dye (IR-dye) or infrared pigment (IR-pigment), most preferably an IR-dye. More preferably, the IR-dye is an organic infrared absorbing dye and is preferably water dispersible, more preferably self dispersing (no addition of surfactant) or encapsulated, and is preferably added to the composition as an aqueous dispersion. The IR-dye includes a conjugated system also referred to as "chromophoric moiety". The chromophoric moiety has its main absorption in the infrared region, i.e. radiation having a wavelength in the range from 750 to 1500 nm, preferably in the range from 750 nm to 1250 nm, more preferably in the range from 750 nm to 1100 nm, and most preferably in the range from 780 nm to 900 nm. Preferably the chromophoric group has its absorption maximum in the infrared region. The IR-dye preferably absorbs laser light of 830 nm. In a particular embodiment, the IR-dye may be bonded by for example one or more covalent bond(s) to the graphene oxide.

Suitable examples of infrared dyes include, but are not limited to, polymethyl indoliums, metal complex IR dyes, indocyanine green, polymethine dyes, croconium dyes, cyanine dyes, merocyanine dyes, squarylium dyes, chalcogenopyryloarylidene dyes, metal thiolate complex dyes, bis(chalcogenopyrylo) polymethine dyes, oxyindolizine dyes, bis(aminoaryl)polymethine dyes, indolizine dyes, pyrylium dyes, quinoid dyes, dyes including a barbituric group, quinone dyes, phthalocyanine dyes, naphthalocyanine dyes, azo dyes, (metalized) azomethine dyes and combinations thereof. The cyanine dyes including five, seven or nine methine-groups disclosed in US 6 515 811 in column 3 to column 40 having an absorption maximum in the wavelength region of 700 to 1200 nm; the infrared dyes having a chemical structure A-B-C disclosed in EP 2 722 367 [044] to [0081] and the dyes disclosed in EP 1 093 015 and in EP 719 304 are preferred dyes.

Cyanine dyes are particularly preferred. The dyes described in EP 1 614 541 and PCT 2006/063327 which become intensively colored after exposure by infrared irradiation or heating and thereby form a visible image are of special interest. Examples of such cyanine dyes are disclosed in EP-A 1 142 707, paragraph [143], EP-A 1 614 541 (page 20 line 25 to page 44 line 29), EP 1 736 312 (paragraphs [0014] to [0021]), EP 1 910 082 and WO 2010/031758 page 6 to page 35. The latter application discloses infrared dyes which result in a higher sensitivity and contain a substituent selected from bromo and iodo.

Other preferred IR-dyes are those disclosed in the EP 2 072 570. These infrared dyes have a structural element according to the following Formula: 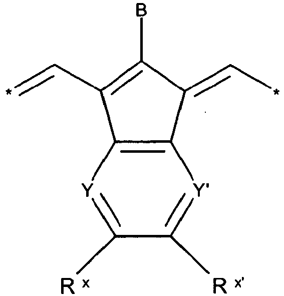 wherein
B represents hydrogen, halogen or a monovalent organic group;
Y and Y' independently represent -CH- or -N-;
R^{x} and R^{x'} independently represent hydrogen, an optionally substituted alkyl or aryl group or represent the necessary atoms to form a ring; and
* represent the linking positions to the rest of the infrared dye.

The monovalent organic group preferably represents an optionally substitued alkyl, aralkyl or aryl group, -OR^{a}, -SR^{b}, -SO₂R^{b}, -NR^{b}R^{c}, -NR^{b} (SO₂R^{d}) or -NR^{b} (CO₂R^{e}) wherein R^{a} and R^{c} represent an optionally substituted aryl group; R^{b} represents an optionally substituted alkyl, aralkyl, aryl or heteroaryl group, R^{d} represents an optionally substituted alkyl or aryl group or -NRⁱ¹Rⁱ² wherein Rⁱ¹ and Rⁱ² independently represent hydrogen, an optionally substituted alkyl or aryl group and R^{e} represents an optionally substituted alkyl group. Specific examples of suitable dyes are given in [0025] of EP 2 072 570.

IR-dyes disclosed in EP 1 736 312 in [0017] to [0025] wherein at least one group transformes by a chemical reaction induced by exposure to IR radiation or heat into a group which is a stronger electron-donor, are also preferred. Other preferred IR-dyes are N-meso substituted cyanine, merocyanine or oxonole dyes including electron withdrawing groups and have a structural element according to one of the following Formula's, as disclosed in WO 2009/080689: 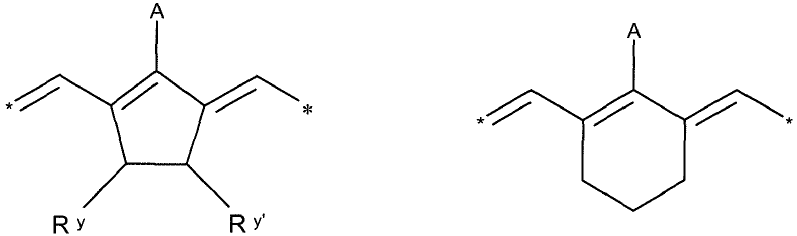 Wherein
A represents hydrogen, halogen, -NR¹-CO-R² or -NR¹-SO₂R³;
R¹ represents hydrogen or an optionally substituted alkyl or (hetero)aryl group, SO₃⁻, COOR⁴ or forms together with R² or R³ a ring structure;
R² and R³ independently represent an optionally substituted alkyl or (hetero) aryl group, OR⁵, NR⁶R⁷ or CF₃;
R⁵ represents an optionally substituted alkyl or (hetero)aryl group;
R⁶ and R⁷ independently represent hydrogen, an optionally substituted alkyl or (hetero)aryl group, or form a ring structure together;
R^{y} and R^{y'} independently represent hydrogen, an optionally substituted alkyl group or represent the necessary atoms to form an optionally substituted ring structure, preferably an optionally substituted 5- or 6-membered ring; most preferably an optionally substituted 5-membered ring;
and * represent the linking positions to the rest of the IR dye.

More preferably, A represents -NR⁸-CO-OC(CH₃)₃; -NR⁸-SO₂-CF₃ or -NR⁸-SO₂-C₆H₄-R⁹, wherein R⁸ and R⁹ independently represent hydrogen or an alkyl group. For example -NCH₃-CO-OC(CH₃)₃-, -NCH₃-SO₂-CF₃ or -NCH₃-SO₂-C₆H₄-CH₃ are particularly preferred groups. Specific dyes are disclosed on page 18 line 1 to page 21 line 5 and on page 26 line 5 to page 33 line 10 of WO2009/080689. For example, the dyes according to the following formula are particularly preferred: 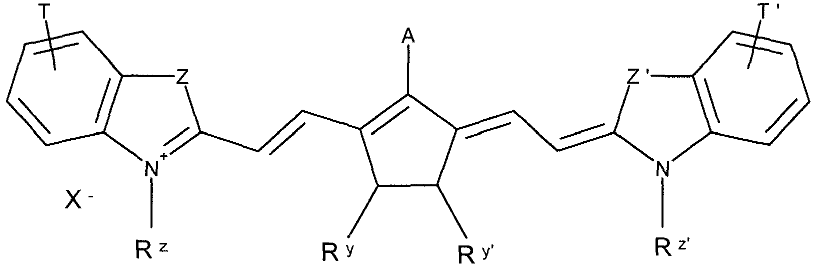 Wherein
A and R^{y} and R^{y'} are as defined above;
T and T' independently represent one or more substituents or an annulated ring such as one or more optionally substituted 5- or 6-membered rings;
Z and Z' independently represent -O-, -S-, -CR¹⁰R¹¹C- or -CH=CH-wherein R¹⁰ and R¹¹ independently represent an alkyl or aryl group; preferably R¹⁰ and R¹¹ independently represent an alkyl group; most preferably R¹⁰ and R¹¹ independently represent a methyl or ethyl gorup;
R^{z} and R^{z'} independently represent an optionally substituted alkyl group; preferably a methyl, ethyl, or a SO₃ substitued alkyl group such as -C₂H₄-SO₃ , -C₃H₆-SO₃, -C₄H₈-SO₃ or -C₅H₁₀-SO₃⁻;
X renders the dye neutral; preferably X⁻ represents a halide anion such as Cl⁻, Br⁻ or I⁻, a sulfonate anion such as CH₃SO₃⁻,
CF₃SO₃⁻, p-toluene sulfonate, tetrafluoroborate or hexafluorophosphate anion.

Specific structures of suitable dyes include:

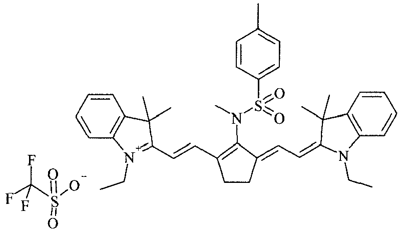

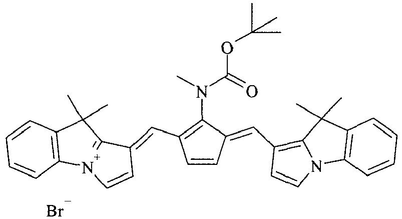

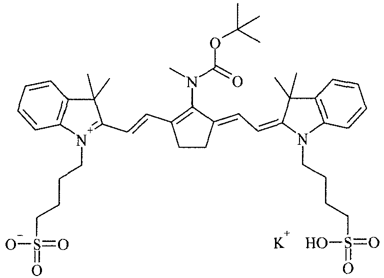

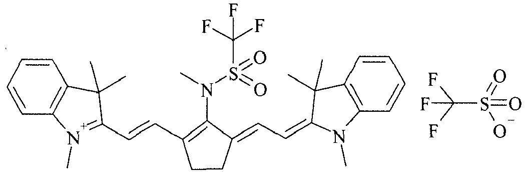

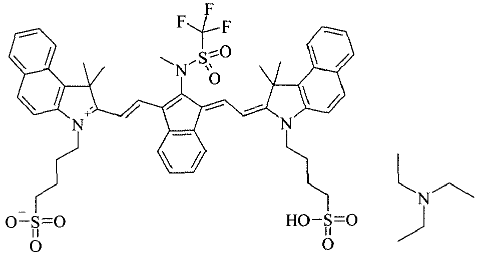

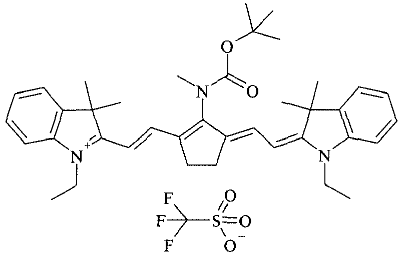

The alkyl group referred to herein is preferably a C₁ to C₆-alkyl group such as for example methyl; ethyl; propyl; n-propyl; isopropyl; n-butyl; isobutyl; tertiary-butyl; n-pentyl; 1,1-dimethyl-propyl; 2,2-dimethylpropyl or 2-methyl-butyl. The aryl group is preferably a phenyl, naphthyl, benzyl, tolyl, ortho- meta- or para-xylyl, anthracenyl or phenanthrenyl. A phenyl group or naphthyl group are most preferred. The heteroaryl group referred to herein is preferably a five- or six-membered ring substituted by one, two or three oxygen atoms, nitrogen atoms, sulphur atoms, selenium atoms or combinations thereof. Examples include pyridyl, pyrimidyl, pyrazoyl, triazinyl, imidazolyl, (1,2,3,)- and (1,2,4)-triazolyl, tetrazolyl, furyl, thienyl, isoxazolyl, thiazolyl and carbazoyl.

The optionally substituted 5- or 6-membered ring preferably represent an aryl or heteroaryl group.

The aralalkyl group referred to herein is preferably a phenyl or naphthyl group including one, two, three or more C₁ to C₆-alkyl groups. Suitable aralkyl groups include for example phenyl groups or naphthyl groups including one, two, three or more C₁ to C₆-alkyl groups.

The optional substituents mentioned above are preferably selected from an alkyl group such as a methyl, ethyl, n-propyl, isopropyl, n-butyl, 1-isobutyl, 2-isobutyl and tertiary-butyl group; an ester, amide, ether, thioether, ketone, aldehyde, sulfoxide, sulfone, sulfonate ester or sulphonamide group, a halogen such as fluorine, chlorine, bromine or iodine, -OH, -SH,-CN and -NO₂, and/or combinations thereof.

Suitable examples of IR-pigments include, organic pigments, inorganic pigments, carbon black, metallic powder pigments and fluorescent pigments. Specific examples of organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, isoindolinone pigments, azomethine pigments, and azo pigments.

In a preferred embodiment of the present invention, the pigments have a hydrophilic surface. The hydrophilicity of the surface may be formed by the presence of hydrophilic groups, such as anionic or non-ionic groups, on the surface of the pigment particle. A hydrophilic surface may be formed by surface treatment, coating or adsorption of compounds such as hydrophilic polymers, reactive materials (e.g. silane coupling agent, an epoxy compound, polyisocyanate, or the like), surfactants (e.g. anionic or non-ionic surfactants) or water soluble salts (e.g. salts of phosphoric acid). Typical hydrophilic polymers are polymers or copolymers having anionic groups such as carboxylic acid, sulphonic acid, phosphonic acid, phosphoric acid, or salts thereof, or having a polyalkylene oxide group such as polyethyleneoxide. Carbon dispersions in water such as CAB O JET 200 and phthalocyanine pigment dispersions in water such as CAB O JET 250, both commercially available from CABOT, are most preferred. Suitable examples of pigments with surface treatment are the modified pigments described in WO 02/04210 and EP 1 524 112.

The pigments preferably have a particle size which is preferably less than 10 *µ*m, more preferably less than 5 *µ*m and especially preferably less than 3 *µ*m. Preferably, the pigment is dispersed in a liquid, preferably an aqueous liquid. Such aqueous liquids include water and mixtures of water with water- miscible organic solvents such as alcohols e.g. methanol, ethanol, 2-propanol, butanol, iso-amyl alcohol, octanol, cetyl alcohol etc; glycols e.g. ethylene glycol; glycerine; N-methyl pyrrolidone; methoxypropanol; and ketones e.g. 2-propanone and 2-butanone etc. The dispersion preferably includes one or more compounds which stabilise the dispersion and prevents coalescing of the particles. Suitable dispersing agents are surfactants and/or polymers which are soluble in the dispersion liquid.

The amount of IR-absorbing compound in the composition is between 5 and 50 % by weight, more preferably between 8 and 40 % by weight and most preferably between 10 and 20 % by weight. These amounts are relative to the composition as a whole.

The composition may also contain one or more additional ingredients. For example, one or more binders, polymer particles such as matting agents and spacers, surfactants such as perfluoro surfactants, silicon or titanium dioxide particles, or colorants are well-known components.

According to the present invention there is also provided a method for making graphene or graphene-like structures comprising the steps of exposing the composition as disclosed above including graphite oxide and an infrared absorbing compound directly with heat or indirectly by visible and/or infrared light, preferably near infrared light. Preferably, before the exposure step, the composition as disclosed above including graphite oxide and an infrared absorbing is applied onto a support and dried. The composition may be applied on to the support by wet coating or by other known methods such as for example vapor deposition, jetting or spray coating. While applying the coating solution, a roller for rubbing and/or brushing the coating may be used. Preferable, the coating layer, i.e. the applied composition, has a thickness upto 10 *µ*m, more preferably upto 5 *µ*m. Alternatively, the coating layer preferably has a thickness between 0.01 *µ*m to 1 *µ*m, more preferably bewteen 0.02 *µ*m to 0.5 *µ*m and most preferably between 0.03 *µ*m to 0.1 *µ*m.

An example of a spray nozzle which can be used in the spraying technique, is an air assisted spray nozzle of the type SUJ1, commercially available at Spraying Systems Belgium, Brussels. The spray nozzle may be mounted on a distance of 50 mm to 200 mm between nozzle and receiving substrate. The flow rate of the spray solution may be set to 7 ml/min. During the spray process an air pressure in the range of 4.80x10⁵ Pa may be used on the spray head. This layer may be dried during the spraying process and/or after the spraying process. Typical examples of jet nozzles which can be used in the jetting technique, are ink-jet nozzles and valve-jet nozzles.

The composition of the present invention can be exposed directly with heat, e.g. by means of a thermal head, or indirectly by infrared light, preferably near infrared light. Preferably, the composition is image-wise exposed producing hydrophobic graphene at the exposed areas. The infrared light is converted into heat by an IR light absorbing compound as discussed above. Any source that provides a suitable wavelength of light may be used in the practice of the invention. The composition of the present invention can be exposed to infrared light by means of e.g. LEDs or an infrared laser. Preferably, the light used for the exposure is a laser emitting near infrared light having a wavelength in the range from about 700 to about 1500 nm, e.g. a semiconductor laser diode, a Nd:YAG or a Nd:YLF laser. The laser power is determined by the pixel dwell time of the laser beam, which is determined by the spot diameter (typical value of modern plate-setters at 1/e² of maximum intensity : 10-25 *µ*m), the scan speed and the resolution of the exposure apparatus (i.e. the number of addressable pixels per unit of linear distance, often expressed in dots per inch or dpi; typical value : 1000-4000 dpi). The power of the laser radiation is preferably in the range from about 1 Watt (W) to about 10 W, preferably in the range from about 2W to about 9 W, more preferably in the range from about 3W to about 8 W, i.e. about 1, 2, 3, 4, 5, 6, 7, 8, 9, or 10 W. The frequency (i.e. the number of cycles per second, "hertz" or "Hz") is preferably in the range from about 10 to about 50 Hz, more preferably from about 20 to about 40 Hz, and most preferably about 30 Hz. It is up to the person skilled in the art to adapt the above described variables, i.e. wavelength, power and frequency, which are interdependent.

The support may be a transparent polymeric support such as a transparent axially stretched polyester support. Suitable transparent polymeric supports include cellulose acetate propionate or cellulose acetate butyrate, polyesters such as polyethylene terephthalate and polyethylene naphthalate, polyamides, polycarbonates, polyimides, polyolefins, polyvinylchlorides, polyvinylacetals, polyethers and polysulphonamides. The transparent polymeric support may be provided with a hydrophylic layer such as a cross-linked hydrophilic layer obtained from a hydrophilic binder cross-linked with a hardening agent such as formaldehyde, glyoxal, polyisocyanate or a hydrolyzed tetra-alkylorthosilicate. The hydrophilic binder may for example be a hydrophilic (co)polymer such as homopolymers and copolymers of vinyl alcohol, acrylamide, methylol acrylamide, methylol methacrylamide, acrylate acid, methacrylate acid, hydroxyethyl acrylate, hydroxyethyl methacrylate or maleic anhydride/vinylmethylether copolymers.

Preferably, the support is a metal support such as aluminium or stainless steel. The support can also be a laminate comprising an aluminium foil and a plastic layer, e.g. polyester film. Preferably, the support is aluminium, more preferred grained and anodized aluminium. The aluminium is preferably grained by electrochemical graining, and preferably anodized by means of anodizing techniques employing phosphoric acid or a sulphuric acid/phosphoric acid mixture. Methods of both graining and anodization of aluminium are very well known in the art. The grained and anodized aluminium support may be post-treated to improve the hydrophilic properties of its surface.

The support may be provided with one or more so-called primer or subbing layers which improves the adhesion of the other layers to the support, or an anti-halation layer containing dyes or pigments which absorb any light that has passed the light-absorbing layer(s). Useful subbing layers for this purpose are well known in the photographic art and include, for example, polymers of vinylidene chloride such as vinylidene chloride/acrylonitrile/acrylic acid terpolymers or vinylidene chloride/methyl acrylate/itaconic acid terpolymers. Typpicaly, a subbing layer has a dry thickness of no more than 2 *µ*m or preferably no more than 200 mg/m².

To protect the surface of the coated composition, in particular from mechanical damage, a protective layer may also optionally be applied. The protective layer generally comprises at least one water-soluble polymeric binder, such as polyvinyl alcohol, polyvinylpyrrolidone, partially hydrolyzed polyvinyl acetates, gelatin, carbohydrates or hydroxyethylcellulose, and can be produced in any known manner such as from an aqueous solution or dispersion which may, if required, contain small amounts, i.e. less than 5% by weight, based on the total weight of the coating solvents for the protective layer, of organic solvents. The thickness of the protective layer can suitably be any amount, advantageously up to 5.0 µm, preferably from 0.05 to 3.0 µm, particularly preferably from 0.10 to 1.0 µm.

In a specific embodiment, the exposed composition may be developed by supplying to the coated composition an aqueous alkaline solution, and/or a suitable solvent, and/or a gum solution and/or by rinsing it with plain water or an aqueous liquid, whereby the non-exposed areas of the coated composition are removed. The gum solution which can be used in the development step, is typically an aqueous liquid which comprises one or more surface protective compounds that are capable of protecting the imaged areas of the composition against contamination or damaging. Suitable examples of such compounds are film-forming hydrophilic polymers or surfactants. The gum solution has preferably a pH from 4 to 10, more preferably from 5 to 8. Preferred gum solutions are described in EP 1,342,568.

The developing step may be combined with mechanical rubbing, e.g. by a rotating brush. During the development step, any water-soluble protective layer present is preferably also removed. The development step with an aqueous alkaline solution may be followed by a rinsing step and/or a gumming step.

The coated composition can, if required, be post-treated with a suitable correcting agent or preservative as known in the art.

The composition of the current invention can be used as a coating for a lithographic printing plate. Furthermore this switch is also a isolation - conductivity switch. Therefore this principle can be suitably used for the preparation of flexible electronics and other conductive materials.

### EXAMPLES.

### 1. Preparation of the support

A 0.3 mm thick aluminium foil was degreased by spraying with an aqueous solution containing 34 g/l NaOH at 70°C for 6 seconds and rinsed with demineralised water for 3.6 seconds. The foil was then electrochemically grained during 8 seconds using an alternating current in an aqueous solution containing 15 g/l HCl, 15 g/l SO₄²⁻ ions and 5 g/l Al³⁺ ions at a temperature of 37°C and a current density of about 100 A/dm² (charge density of about 800 C/dm²). Afterwards, the aluminium foil was desmutted by etching with an aqueous solution containing 6.5 g/l of sodium hydroxide at 35°C for 5 seconds and rinsed with demineralised water for 4 seconds. The foil was subsequently subjected to anodic oxidation during 10 seconds in an aqueous solution containing 145 g/l of sulfuric acid at a temperature of 57°C and an anodic charge of 250 °C/dm², then washed with demineralised water for 7 seconds and dried at 120°C for 7 seconds.

The support thus obtained (support S-00) was characterised by a surface roughness Rₐ of 0.45-0.50 *µ*m (measured with interferometer NT3300 and had an anodic weight of about 3.0 g/m² (gravimetric analysis).

### 2. Test samples TS-00 to TS-03

The test samples TS-00 to TS-03 were produced by applying a coating solution respectively onto the above described support S-00 and on a PET substrate by means of a semi-automated coating device. The coating solutions were applied at a wet coating thickness of 34 µm and then dried at 60°C for 3 minutes. The dry coating weight in mg/m² of each of the ingredients is indicated in Table 1.

The coating solutions contain the ingredients as defined in Table 1, dissolved in water.

**Table 1: dry coating weight of the coating compositions.**

| **INGREDIENTS*** | mg/m² |
|---|---|
| Graphite oxide (1) | 108.7 |
| Tivida FL 2300 (2) | 8.64 |
| PSS (3) | 1.36 |
| IR absorbing compound (4) | 17.3 |
| **Dry coating weight** | 136.0 |

| | |
|---|---|
| *: active ingredients in the coating (1) Aqueous dispersion of graphite oxide; commercially available from Graphenea; (2) surfactant commercially available from Merck KGaA; (3) polystyrene sulfonic acid; (4) see Table 2; | |

**Table 2: Test samples TS-00 to TS-03**

| Test sample | Composition | IR absorbing compound |
|---|---|---|
| TS-00 *reference* | Reference Composition | - |
| TS-01 *inventive* | composition-01 | IR-01 (1) |
| TS-02 *inventive* | composition-02 | IR-02 (2) |
| TS-03 *inventive* | composition-03 | CAB-O-JET 300 (3) |

| | | |
|---|---|---|
| (1) IR-01: dispersion in water; may be prepared by well known synthesis methods such as for example disclosed in EP 2 072 570; 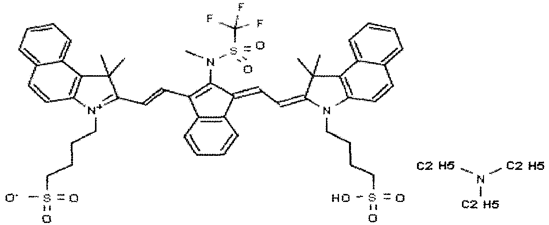 (2) IR-02: Dispersion in water, , synthesis as described in WO2009/080689, Example 15; *Preparation of D-09,* page 48: 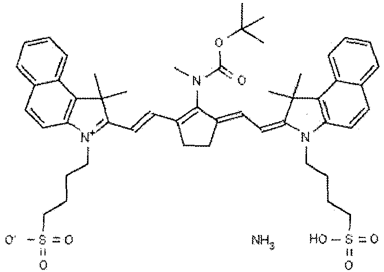 (3) CAB-O-JET 300, 15%: carbon black; commercially available from CABOT CORPORATION; | | |

### 3. Visual appearance of the graphite oxide coatings

The visual evaluation of the coating was determined by observing (i) the homogeneity of the coating, (ii) the level of overly concentrated dark regions of graphite oxide and (iii) the level of uncoated regions on the substrate. A scale ranging from 1 (= bad coating appearance) to 5 (= excellent coating appearance) was employed. The results of the evaluation are given in Table 3.

**Table 3: Visual evaluation of graphite oxide coatings on the Al support S-00 and on the PET support.**

| Test Sample | Visual appearance* | |
|---|---|---|
| | AL support | PET support |
| TS-00 *Reference* | 3.5 | 4.0 |
| TS-01 *inventive* | 3.5 | 4.0 |
| TS-02 *inventive* | 3.5 | 3.5 |
| TS-03 *inventive* | 4.5 | 4.5 |

| | | |
|---|---|---|
| * 1 = unhomogeneous coating including a high level of uncoated areas and a high level of overly concentrated regions; 2 = unhomogeneous coating including many uncoated areas and many overly concentrated regions; 3 = unhomogeneous to homogeneous coating including some uncoated areas and some overly concentrated regions; 4 = rather homogeneous coating including only a few overly concentrated regions; 5 = complete homogeneous coating evenly colored (no overly concentrated regions). | | |

The results indicate that the reference test sample and the test samples including a coating including graphite oxide and an infrared absorbing compound are well-coatable on both the Al and the PET support.

### 4. Image-wise exposure of the Test Samples TS-00 to TS-03

The test samples TS-00 to TS-03 were image-wise exposed at a range of energy densities (300 mJ/cm² to 200 mJ/cm²) with a Creo Trendsetter, a platesetter having a 40 W infrared laser head (830 nm) commercially available from Eastman Kodak Corp.

Six different irradiation energies were tested to determine the the ability of the IR-absorbing compounds to show an improvement in the graphite oxide to graphene or graphene-like structures switch in comparison to the reference test TS-00 where no IR-absorbing compound is present. The evaluation of the switch was visual: graphite oxide appears brownish whereas the graphene/graphene-like structures obtained after exposure are darker (black). The results of the visual evaluation is given in Table 4.

**Table 4: Evaluation of the graphite oxide to graphene switch**

| Test sample | Exposure energy density mJ/cm² | | | | | |
|---|---|---|---|---|---|---|
| | Results* | | | | | |
| | 300 | 280 | 260 | 240 | 220 | 200 |
| Reference TS-00 | + | + | + | - | - | - |
| TS-01 | ++ | ++ | +++ | +++ | +++ | +++ |
| TS-02 | ++ | ++ | +++ | +++ | +++ | +++ |
| TS-03 | ++ | + | + | + | + | + |

| | | | | | | |
|---|---|---|---|---|---|---|
| *: -: no clear graphite oxide to grapheme/graphene-like structures switch; +: clear graphite oxide to garphene/graphene-like structures switch; ++: even more pronounced graphite oxide to graphene/graphene-like structures switch; +++: excellent graphite oxide to grapheme/graphene-like structures switch. | | | | | | |

The results show that at the lower exposure energies - i.e. 200 mJ/cm² to 240 mJ/cm² - there is no clear graphite oxide to graphene or graphene-like structures switch of the test sample TS-00 while at the higher exposure energies - i.e. 260 mJ/cm² to 300 mJ/cm² - a clear switch occurs. The IR-absorbing compounds IR-01 and IR-02 (test samples TS-01 and TS-02) improve the irradiation quality compared to the reference test sample TS-00. The IR-pigment CABOJET-O-JET 300 (test sample TS-03) also improves the irradiation quality, especially at the lower exposure energies 220 mJ/cm² to 240 mJ/cm².

Furthermore, the infrared absorbing compounds allow a large operating window as the graphite oxide to graphene switch is obtained at exposure energies ranging from 200 to 300 mJ/cm².

## Claims

1. A composition including graphite oxide,
**characterised in that** the composition comprises an infrared absorbing compound selected from an infrared pigment, or an infrared dye including a conjugated system having its main absorption in the infrared region, and is present in the composition in an amount between 5 and 50 % by weight.

2. The composition according to claim 1 wherein the infrared absorbing compound is an infrared dye.

3. The composition according to claim 2 wherein the infrared dye is water-soluble.

4. The composition according to claims 2 or 3 wherein the infrared dye is a cyanine dye.

5. The composition according to any of the preceding claims 2 to 4 wherein the infrared dye has a structural element according to one of the following Formula's: 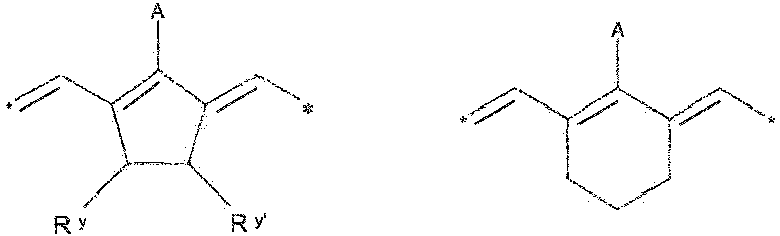 Wherein
A represents hydrogen, halogen, -NR¹-CO-R² or -NR¹-SO₂R³;
R¹ represents hydrogen or an optionally substituted alkyl or (hetero)aryl group, SO₃⁻, COOR⁴ or forms together with R² or R³ a ring structure;
R² and R³ independently represent an optionally substituted alkyl or (hetero)aryl group, OR⁵, NR⁶R⁷ or CF₃;
R⁴ and R⁵ independently represent an optionally substituted alkyl or (hetero)aryl group;
R⁶ and R⁷ independently represent hydrogen, an optionally substituted alkyl or (hetero)aryl group, or form a ring structure together;
R^{y} and R^{y'} independently represent hydrogen, an optionally substituted alkyl group or represent the necessary atoms to form an optionally substituted ring structure;
and * represent the linking positions to the rest of the IR dye.

6. The composition according to claim 5 wherein A represents
-NR⁸-CO-OC(CH₃)₃
-NR⁸-SO₂-CF₃
-NR⁸-SO₂-C₆H₄-R⁹
wherein R⁸ and R⁹ independently represent hydrogen or an alkyl group.

7. The composition according to any of the preceding claims 2 to 6 wherein the infrared dye is represented by the following structure: 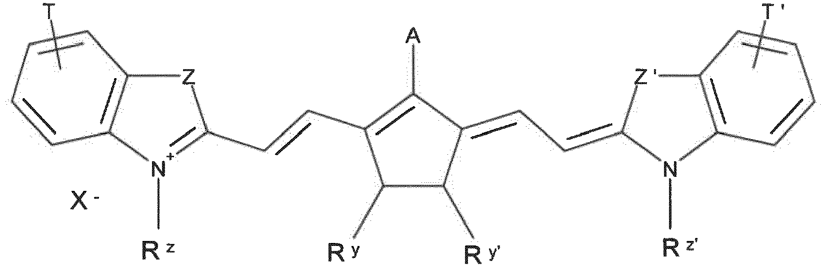 Wherein
A and R^{y} and R^{y'} are as defined in claim 6;
T and T' independently represent one or more substituents or an annulated ring;
Z and Z' independently represent -O-, -S-, -CR¹⁰R¹¹C- or -CH=CH-wherein R¹⁰ and R¹¹ independently represent an alkyl or aryl group;
R^{z} and R^{z'} independently represent an optionally substituted alkyl group;
X⁻ renders the dye neutral.

8. The composition according to claim 7 wherein Z and Z' independently represent -C[(CH₃)₂]- and R^{z} and R^{z'} independently represent SO₃⁻ substituted groups.

9. The composition according to any of the preceding claims wherein the graphite oxide is present in the imaging layer in an amount of 0.05 mg/m² to 10 g/m².

10. A method of making graphene or graphene-like structures including the step of exposing the composition according to any of the preceding claims to heat and/or infrared light.

11. A method according to claim 10 wherein before the exposure step the composition is applied onto a support and dried.

12. A method according to claim 11 wherein the coating layer has a thickness between 0.01 *µ*m to 1 *µ*m.

13. A method according to claims 11 or 12 wherein the support is aluminum.

14. A method according to any of the preceding claims 10 to 13 wherein the exposed areas convert from a hydrophylic state to a hydrophobic state.

## Patentansprüche

1. Eine Zusammensetzung, enthaltend Graphitoxid,
**dadurch gekennzeichnet, dass** die Zusammensetzung eine Infrarotlicht absorbierende Verbindung enthält, die aus einem Infrarot-Pigment oder einem Infrarot-Farbstoff, enthaltend ein konjugiertes System mit seiner Hauptabsorption im Infrarotbereich, ausgewählt wird und in einer Menge zwischen 5 Gew.-% und 50 Gew.-% in der Zusammensetzung enthalten ist.

2. Die Zusammensetzung nach Anspruch 1, wobei die Infrarotlicht absorbierende Verbindung ein Infrarot-Farbstoff ist.

3. Die Zusammensetzung nach Anspruch 2, wobei der Infrarot-Farbstoff wasserlöslich ist.

4. Die Zusammensetzung nach den Ansprüchen 2 oder 3, wobei der Infrarot-Farbstoff ein Cyaninfarbstoff ist.

5. Die Zusammensetzung nach einem der vorstehenden Ansprüche 2 bis 4, wobei der Infrarot-Farbstoff ein Strukturelement gemäß einer der folgenden Formeln hat: 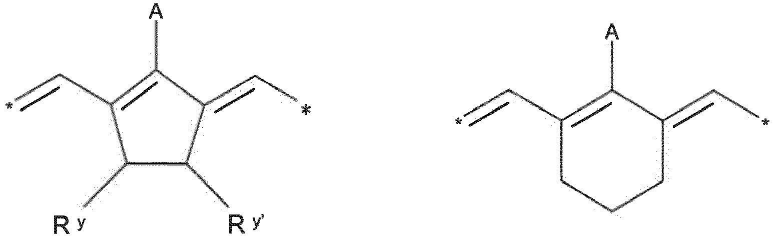 in denen
A Wasserstoff, Halogen, -NR¹-CO-R² oder -NR¹-SO₂R³ bedeutet,
R¹ Wasserstoff oder eine gegebenenfalls substituierte Alkylgruppe oder (Hetero)arylgruppe, S0₃⁻ oder COOR⁴ bedeutet oder gemeinsam mit R² oder R³ eine Ringstruktur bildet,
R² und R³ unabhängig voneinander eine gegebenenfalls substituierte Alkylgruppe oder (Hetero)arylgruppe, OR⁵, NR⁶R⁷ oder CF₃ bedeuten,
R⁴ und R⁵ unabhängig voneinander eine gegebenenfalls substituierte Alkylgruppe oder (Hetero)arylgruppe bedeuten,
R⁶ und R⁷ unabhängig voneinander Wasserstoff oder eine gegebenenfalls substituierte Alkylgruppe oder (Hetero)arylgruppe bedeuten oder gemeinsam eine Ringstruktur bilden,
R^{y} und R^{y'} unabhängig voneinander Wasserstoff oder eine gegebenenfalls substituierte Alkylgruppe bedeuten oder die zur Bildung einer gegebenenfalls substituierten Ringstruktur benötigten Atome bedeuten,
und * die Bindungsstellen am Rest des IR-Farbstoffes bedeuten.

6. Die Zusammensetzung nach Anspruch 5, wobei A
-NR⁸-CO-OC(CH₃)₃
-NR⁸-SO₂-CF₃
-NR⁸-SO₂-C₆H₄-R⁹
bedeutet, wobei R⁸ und R⁹ unabhängig voneinander Wasserstoff oder eine Alkylgruppe bedeuten.

7. Die Zusammensetzung nach einem der vorstehenden Ansprüche 2 bis 6, wobei der IR-Farbstoff durch die folgenden Struktur dargestellt wird: 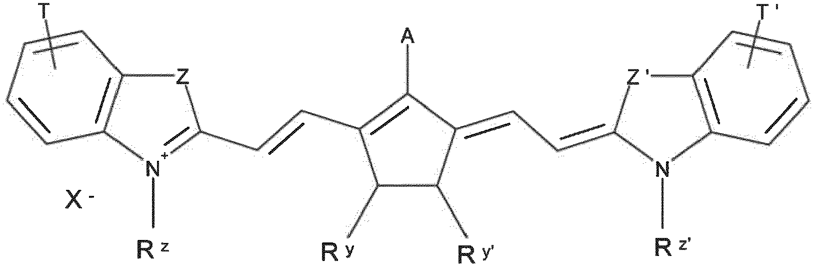 in der
A und R^{y} und R^{y'} wie in Anspruch 6 definiert sind,
T und T' unabhängig voneinander einen oder mehrere Substituenten oder einen anellierten Ring bedeuten,
Z und Z' unabhängig voneinander -O-, -S-, -CR¹⁰R¹¹C- oder -CH=CH-bedeuten, wobei R¹⁰ und R¹¹ unabhängig voneinander eine Alkylgruppe oder Arylgruppe bedeuten,
R^{z} und R^{z'} unabhängig voneinander eine gegebenenfalls substituierte Alkylgruppe bedeuten,
X⁻ den Farbstoff neutralisiert.

8. Die Zusammensetzung nach Anspruch 7, wobei Z und Z' unabhängig voneinander -C[(CH₃)₂]- bedeuten und R^{z} und R^{z'} unabhängig voneinander SO₃⁻-substituierte Gruppen bedeuten.

9. Die Zusammensetzung nach einem der vorstehenden Ansprüche, wobei das Graphitoxid in einer Menge zwischen 0,05 mg/m² und 10 g/m² in der bildgebenden Schicht enthalten ist.

10. Ein Verfahren zur Herstellung von Graphenstrukturen oder graphenartigen Strukturen, umfassend den Schritt, in dem die Zusammensetzung nach einem der vorstehenden Ansprüche an Wärme und/oder Infrarotlicht ausgesetzt wird.

11. Ein Verfahren nach Anspruch 10, wobei vor dem Aussetzungsschritt die Zusammensetzung auf einen Träger aufgetragen und getrocknet wird.

12. Ein Verfahren nach Anspruch 11, wobei die Beschichtung eine Stärke zwischen 0,01 *µ*m und 1 *µ*m aufweist.

13. Ein Verfahren nach den Ansprüchen 11 oder 12, wobei der Träger Aluminium ist.

14. Ein Verfahren nach einem der vorstehenden Ansprüche 10 bis 13, wobei die erwärmten oder belichteten Bereiche von einem hydrophilen Zustand in einen hydrophoben Zustand umgewandelt werden.

## Revendications

1. Composition contenant de l'oxyde de graphite,
**caractérisée en ce que** la composition contient un composé absorbant les rayons infrarouges qui est choisi parmi un pigment absorbant les rayons infrarouges ou un colorant absorbant les rayons infrarouges contenant un système conjugué ayant son absorption principale dans l'intervalle de la lumière infrarouge et qui est contenu dans la composition dans une quantité comprise entre 5% en poids et 50% en poids.

2. Composition selon la revendication 1, **caractérisée en ce que** le composé absorbant les rayons infrarouges est un colorant absorbant les rayons infrarouges.

3. Composition selon la revendication 2, **caractérisée en ce que** le colorant absorbant les rayons infrarouges est soluble dans l'eau.

4. Composition selon les revendications 2 ou 3, **caractérisée en ce que** le colorant absorbant les rayons infrarouges est un colorant de cyanine.

5. Composition selon l'une quelconque des revendications précédentes 2 à 4, **caractérisée en ce que** le colorant absorbant les rayons infrarouges contient un élément structural selon l'une des formules ci-après: 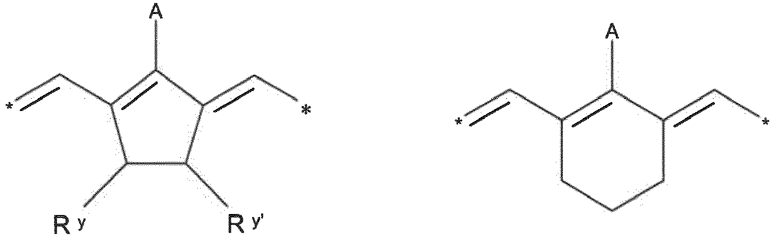 où
A représente l'hydrogène, l'halogène, -NR¹-CO-R² ou -NR¹-SO₂R³,
R¹ représente l'hydrogène ou un groupe alkyle ou (hétéro)aryle éventuellement substitué, S0₃⁻ ou COOR⁴ ou forme, conjointement avec R² ou R³, une structure cyclique,
R² et R³ représentent, l'un indépendamment de l'autre, un groupe alkyle ou (hétéro)aryle éventuellement substitué, OR⁵, NR⁶R⁷ ou CF₃,
R⁴ et R⁵ représentent, l'un indépendamment de l'autre, un groupe alkyle ou (hétéro)aryle éventuellement substitué,
R⁶ et R⁷ représentent, l'un indépendamment de l'autre, l'hydrogène ou un groupe alkyle ou (hétéro)aryle éventuellement substitué ou forment ensemble une structure cyclique,
R^{y} et R^{y'} représentent, l'un indépendamment de l'autre, l'hydrogène ou un groupe alkyle éventuellement substitué ou représentent les atomes nécessaires pour former une structure cyclique éventuellement substituée,
et * représente les sites de liaison au reste du colorant absorbant les rayons infrarouges.

6. Composition selon la revendication 5, **caractérisée en ce que** A représente
-NR⁸-CO-OC(CH₃)₃
-NR⁸-SO₂-CF₃
-NR⁸-SO₂-C₆H₄-R⁹
où R⁸ et R⁹ représentent, l'un indépendamment de l'autre, l'hydrogène ou un groupe alkyle.

7. Composition selon l'une quelconque des revendications précédentes 2 à 6, **caractérisée en ce que** le colorant absorbant les rayons infrarouges est représenté par la structure ci-après: 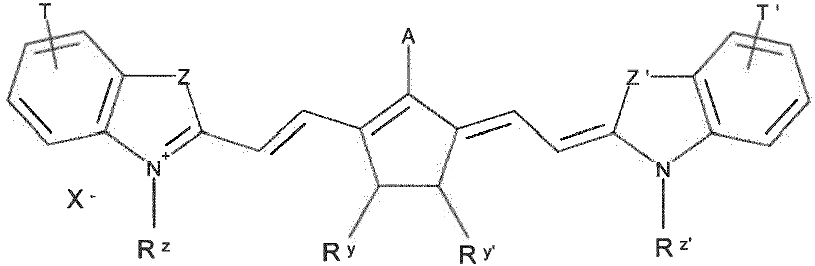 où
A et R^{y} et R^{y'} sont définis tel que selon la revendication 6,
T et T' représentent, l'un indépendamment de l'autre, un ou plusieurs substituants ou un groupe annélé,
Z et Z' représentent, l'un indépendamment de l'autre, -O-, -S-, -CR¹⁰R¹¹C- ou -CH=CH-, où R¹⁰ et R¹¹ représentent, l'un indépendamment de l'autre, un groupe alkyle ou aryle,
R^{z} et R^{z'} représentent, l'un indépendamment de l'autre, un groupe alkyle éventuellement substitué,
X⁻ neutralise le colorant.

8. Composition selon la revendication 7, **caractérisée en ce que** Z et Z' représentent, l'un indépendamment de l'autre, -C[(CH₃)₂]- et R^{z} et R^{z'} représentent, l'un indépendamment de l'autre, des groupes SO₃⁻-substitués.

9. Composition selon l'une quelconque des revendications précédentes, **caractérisée en ce que** l'oxyde de graphite est contenu dans la couche formatrice d'image dans une quantité comprise entre 0,05 mg/m² et 10 g/m².

10. Procédé pour la fabrication de structures de graphène ou de structures de type graphène, comprenant l'étape consistant à exposer la composition selon l'une quelconque des revendications précédentes à de la chaleur et/ou à de la lumière infrarouge.

11. Procédé selon la revendication 10, **caractérisé en ce qu'**avant l'étape d'exposition la composition est appliquée sur un support et séchée.

12. Procédé selon la revendication 11, **caractérisé en ce que** la couche de revêtement présente une épaisseur comprise entre 0,01 *µ*m et 1 *µ*m.

13. Procédé selon les revendications 11 ou 12, **caractérisé en ce que** le support est de l'aluminium.

14. Procédé selon l'une quelconque des revendications précédentes 10 à 13, **caractérisé en ce que** les zones exposées se convertissent d'un état hydrophile en un état hydrophobe.
